**Europäisches Patentamt**

**European Patent Office**

**Office européen des brevets**

(11) Veröffentlichungsnummer: **0 044 506**

**A1**

(12) **EUROPÄISCHE PATENTANMELDUNG**

(21) Anmeldenummer: **81105504.5**

(22) Anmeldetag: **14.07.81**

(51) Int. Cl.³: **B 29 B 1/00**
**B 29 C 29/00, B 09 B 3/00**

(30) Priorität: **18.07.80 DE 3027252**

(43) Veröffentlichungstag der Anmeldung:
**27.01.82 Patentblatt 82/4**

(84) Benannte Vertragsstaaten:
**AT BE CH FR GB IT LI NL SE**

(71) Anmelder: **TYCZKA GmbH & Co. Gesellschaft für Gase,**
**Wassertechnik, Engineering**
**Blumenstrasse 5**
**D-8192 Geretsried(DE)**

(72) Erfinder: **Tallafus, Ottmar**
**Am Himmelreich 14**
**D-6967 Buchen(DE)**

(74) Vertreter: **Trappenberg, Hans Europäischer**
**Patentvertreter**
**Postfach 1909 Wendtstrasse 1**
**D-7500 Karlsruhe 21(DE)**

(54) **Verfahren zum Trennen unterschiedlicher Kunststoffe.**

(57) Die Erfindung betrifft ein Verfahren zum Trennen, in ihrem spezifischen Gewicht nur geringfügig unterschiedlicher, in einem körnigen Gemenge vorliegender Kunststoffe und ist dadurch gekennzeichnet, daß das Gemenge bei der Versprödungstemperatur des Kunststoffanteils mit der niedrigeren Versprödungstemperatur einer Feinmühle zugeleitet, das gemahlene Gut gesiebt und das Siebgut getrennt nach Korngröße einem Agglomerator zugeleitet wird.

EP 0 044 506 A1

Croydon Printing Company Ltd.

-1-

Tyczka GmbH & Co.
Gesellschaft für Gase, Wassertechnik, Engineering
Blumenstr. 5, 8192 Geretsried

Verfahren zum Trennen unterschiedlicher Kunststoffe

Die Erfindung betrifft ein Verfahren zum Trennen, in ihrem spezifischen Gewicht nur geringfügig unterschiedlicher, in einem körnigen Gemenge vorliegender, Kunststoffe.

Insbesondere bei der Wiederverwertung von Kunststoffen müssen unterschiedliche, in einem Gemenge vorliegende Kunststoffe voneinander getrennt werden, um eine Wiederverwertung zu ermöglichen. Beispielsweise treffen bei Film-Entwicklungsanstalten eine große Anzahl von Filmkassetten ein, deren Kunststoffmaterial, kann es einer Wiederverwertung zugeführt werden, einen erheblichen Wert darstellt. Aller-

- 2 -

dings sind in diesen, aus Polystyrol bestehenden Kassetten, auch aus Polycarbonat bestehende Teile angeordnet, so daß beim Zerkleinern des Kassettenmaterials stets ein Gemenge aus Polystyrol und Polycarbonat vorliegt. Zur Wiederverwertung müssen diese beiden Kunststoffe voneinander separiert werden, wobei allerdings wirtschaftlich durchführbare Trennverfahren, die auf dem unterschiedlichen spezifischen Gewicht von Teilen beruhen, dadurch, daß dieses spezifische Gewicht im Falle der Kunststoffe nur geringfügig voneinander abweicht, nicht eingesetzt werden können. Daher geschieht das Aussortieren zur Zeit dadurch, daß die Polycarbonatteile manuell aus dem grob zerschlagenen Kunststoffmaterial herausgesucht werden. Selbstverständlich ist diese Sortierung äußerst unwirtschaftlich.

Aufgabe der Erfindung ist es, ein Verfahren anzugeben, wie die Trennung unterschiedlicher Kunststoffanteile in einem körnig vorliegenden Gemenge ohne manuelle Arbeit vorgenommen werden kann.

Gelöst wird diese Aufgabe dadurch, daß das Gemenge bei der Versprödungstemperatur des Kunststoffanteils mit der niedrigeren Versprödungstemperatur einer Feinmühle zugeleitet, das gemahlene Gut gesiebt
und das Siebgut getrennt nach Korngröße einem Agglomerator zugeleitet wird.

Die Erfindung macht sich damit die Erkenntnis zunutze, daß versprödeter Kunststoff in einer Feinmühle feiner gemahlen wird, als, bei gleicher Einstellung, nicht versprödeter Kunststoff. So wird beispielsweise bei einer bestimmten Einstellung und einer bestimmten Minustemperatur in einer Fein-

- 3 -

Schlagmühle versprödetes Polystyrol auf eine Korngröße unter 200 µm gemahlen, während Polycarbonat, das nicht versprödet wurde, ein deutlich gröberes Korn ergibt. Nach dem Feinmahlen wird das gemahlene Gut abgesiebt, wobei sich die gröberen Bestandteile des Mahlgutes, die aus dem nicht versprödeten Kunststoff bestehen, von den feineren Bestandteilen, die aus dem zuvor versprödeten Kunststoff bestehen, trennen. Das so getrennte Kunststoffmaterial kann nunmehr in bekannter Weise einem Agglomerator zur Bildung eines wiederverwertbaren Kunststoff-Granulats zugeführt werden, das dann einen sehr hohen Reinheitsgrad aufweist.

Selbstverständlich besteht auch die Möglichkeit, das Verfahren, besteht das Gemenge aus mehreren zu trennenden Kunststoffanteilen, jeweils beginnend mit der niedrigsten Versprödungstemperatur des zu trennenden Kunststoffanteils bzw. des Kunststoffanteils, der zusammen weiterverwertet werden kann, zu wiederholen, so daß ohne manuelle Arbeiten eine einwandfreie Trennung mehrerer verschiedener Kunststoffsorten möglich ist.

Zweckmäßigerweise wird bei der Anwendung des erfindungsgemäßen Verfahrens als Feinmühle eine gekühlte Schlagmühle eingesetzt. Dadurch ist gewährleistet, daß das zu mahlende Gemenge auch tatsächlich bei der gewünschten Versprödungstemperatur feingemahlen wird. Die Kühlung des Gemenges erfolgt vorteilhafterweise in einem Gegenstromkühler, der mittels flüssigen bzw. vergasenden tiefkalten Gasen, vorzugsweise Stickstoff, gekühlt ist.

Tyczka GmbH & Co.
Gesellschaft für Gase, Wassertechnik, Engineering
Blumenstr. 5, 8192 Geretsried

P A T E N T A N S P R Ü C H E
==========================================

1. Verfahren zum Trennen, in ihrem spezifischen Gewicht nur
   geringfügig unterschiedlicher, in einem körnigen Gemenge
   vorliegender, Kunststoffe,
   dadurch gekennzeichnet,
   daß das Gemenge bei der Versprödungstemperatur des Kunststoffanteils mit der niedrigeren Versprödungstemperatur
   einer Feinmühle zugeleitet,
   das gemahlene Gut gesiebt
   und das Siebgut getrennt nach Korngröße einem Agglomerator
   zugeleitet wird.

2. Verfahren nach Anspruch 1,
dadurch gekennzeichnet,
daß die Feinmühle eine Schlagmühle ist.

3. Verfahren nach Anspruch 2,
dadurch gekennzeichnet,
daß die Feinmühle gekühlt ist.

4. Verfahren nach einem oder mehreren
der vorhergehenden Ansprüche,
dadurch gekennzeichnet,
daß die Kühlung des Gemenges in einem Gegenstromkühler
erfolgt.

5. Verfahren nach einem oder mehreren
der vorhergehenden Ansprüche,
dadurch gekennzeichnet,
daß die Kühlung mittels flüssigen/vergasenden tiefkalten
Gasen, insbesondere Stickstoff, erfolgt.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US – A – 4 162 880 (W.H. COBBS et al.)<br>* Anspruch 1; Fig. 1 *<br>-- | 1,2 |
| | DE – B2 – 2 422 804 (ULTREX-CHEMIE GMBH)<br>* Anspruch 1; Spalte 3, Zeile 3 *<br>-- | 1,4, 5 |
| A | AT – B – 353 724 (TOPPAN PRINTING CO.)<br>* Ansprüche 1, 6 *<br>-- | |
| A | DE – A1 – 2 636 805 (AIR PRODUCTS AND CHEMICALS, INC.)<br>* Ansprüche 1 bis 9 *<br>-- | |
| A | GB – A – 1 478 259 (G. EMERY)<br>* Anspruch 1 *<br>& DE – A1 – 2 534 309<br>---- | |

**KLASSIFIKATION DER ANMELDUNG (Int. Cl.³)**

B 29 B   1/00

B 29 C 29/00

B 09 B   3/00

**RECHERCHIERTE SACHGEBIETE (Int. Cl.³)**

B 02 C 18/44

B 09 B   3/00

B 29 B   1/00

B 29 C 29/00

B 29 H 19/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 24-08-1981 | BITTNER |

EPA form 1503.1  08.78